# EUROPÄISCHE PATENTANMELDUNG

(11) **EP 1 560 461 A1**
(43) Veröffentlichungstag der Anmeldung: **03.08.2005**
(21) Anmeldenummer: 05001607.0
(22) Anmeldetag: 26.01.2005
(51) Int. Cl.: H04R 25/00

(54) **Integriertes Hörgerät**

(30) Priorität: 29.01.2004 DE 202004001410 U
(71) Anmelder: Bach, Quang Minh, Dr. Dr., 44575 Castrop-Rauxel (DE)
(72) Erfinder: Bach, Quang Minh, Dr. Dr., 44575 Castrop-Rauxel (DE)
(74) Vertreter: Vollmann, Heiko, Dipl.-Ing.

(57) **Zusammenfassung**

Das Hörgerät weist ein Empfangsteil (2) und ein Wiedergabeteil (3) auf. Das Empfangsteil (2) ist Teil eines Multimediagerätes (11) wie z. B. MP3-Player, CD-Player, Handy oder dergleichen. Das Wiedergabeteil (4) weist einen Kopf- oder Ohrhörer (10) auf, der mit dem Multimediagerät (11) signalverbunden ist, so dass praktisch beliebige Geräte der Unterhaltungselektronik auch als Hörgerät dienen können (Fig. 1).

## Beschreibung

Die Erfindung betrifft ein Hörgerät mit einem Empfangs- und einem Wiedergabeteil.

Herkömmliche Hörgeräte, etwa nach dem DE 296 02 839 U1, werden mit einem Teil Ihres Gehäuses in den Gehörgang eingeführt, wobei ein weiterer Teil des Gehäuses außen an der Ohrmuschel anliegt (Ohrpassstück bzw. Otoplastik). Die Form des Gehäuses ist so gewählt, dass sie sich möglichst gut an ein normales Ohr anschmiegt, so dass ein gewisser Halt gegeben ist. Sie erlauben einer hörgeschädigten Person, durch verbessertes Hörvermögen, Gesprächen folgen und somit aktiv am Leben teilnehmen zu können.

Allerdings scheuen viele Hörgeschädigte, gerade zu Beginn ihrer Erkrankung, vor der Anschaffung eines herkömmlichen Hörgerätes zurück. Auch bekommen die Benutzer herkömmlicher Hörgeräte mit Ohrpassstücken häufig so genannte Verschlusseffekte im Ohr. Ebenso können Druckstellen am Gehörgang, Entzündungen oder Allergien auftreten. Das Hörgerät muss regelmäßig gereinigt und gepflegt werden, es fallen regelmäßig hohe Kosten für Knopfzellen (Batterien) an, mit denen die Energieversorgung sichergestellt wird. Auch tritt häufig ein für den Benutzer und seine Umwelt lästiges und umständliches Rückkopplungspfeifen auf. Konventionelle Hörgeräte sind außerdem in der Regel relativ teuer.

Die Aufgabe der Erfindung ist daher, eine Lösung zu schaffen, mit der die beschriebenen Nachteile vermieden und die Handhabung und der Komfort für den Benutzer erhöht werden, gleichzeitig soll die Einstiegsschwelle für die Anschaffung eines Hörgerätes herabgesetzt werden.

Diese Aufgabe wird gemäß der Erfindung durch ein Hörgerät mit einem Empfangs- und einem Wiedergabeteil gelöst, wobei der Empfangsteil Teil eines Multimedia-Gerätes bildet und der Wiedergabeteil einen Kopf- oder Ohrhörer aufweist, der mit dem Multimediagerät signalverbunden ist.

Multimediagerät im Sinne der vorliegenden Erfindung kann jedes elektronische Gerät sein, das zur Verarbeitung akustischer oder optischer Signale vorgesehen oder nur geeignet ist. Grundgedanke dabei ist, einem praktisch beliebigen elektronischen Gerät, typischerweise der Unterhaltungselektronik, das in großen Stückzahlen kostengünstig produziert wird, als Hörgerät auszubilden, um damit nicht nur diesem Gerät einen zusätzlichen Verwendungszweck zu geben, sondern um insbesondere kostengünstig und nicht auf Anhieb erkennbar, ein Hörgerät bereitzustellen.

Mit der erfindungsgemäßen Lösung kann auf ein spezielles Ohrpassstück und die damit verbundenen Probleme und Kosten vollständig verzichtet werden. Kopfhörer oder Head-Sets sind vielfach bereits vorhanden, etwa als Bestandteil oder Zusatzteil zu Audio- oder Video (spiel) Geräten wie z. B. MC- und CD-Abspielgeräten (Walkman®) oder MP3-Player und Telekommunikationsgeräten, insbesondere Mobilfunktelefonen. Diese können drahtgebunden oder drahtlos, z. B. mittels Infrarotstrahl oder Bluetooth bzw. Funk mit dem Kopfhörer bzw. Head-Set verbunden sein. Kopfhörer oder Head-Sets können monaural oder biaural ausgebildet sein, also je nach Beeinträchtigung des Benutzers der Einsatzsituation ein oder auch beide Ohren versorgen.

Die erfindungsgemäße Lösung ermöglicht also die Bereitstellung eines Hörgerätes auf zum einen kostengünstige Art und zum anderen auf für Dritte nicht erkennbare Weise. Das erfindungsgemäße Hörgerät kann im einfachsten Fall durch Einspielen einer geeigneten Software realisiert werden, da eine Vielzahl von Multimediageräten schon die komplette Hardware beinhalten, die für die Bereitstellung der Hörgerätefunktion erforderlich ist. Dies sind insbesondere ein Mikrofon, ein Kopf- oder Ohrhörer sowie ein Verstärker und entsprechende Signalverbindungen dazwischen. Dabei spielt es grundsätzlich keine Rolle, ob die Signalübertragung schnurgebunden oder schnurlos erfolgt, ob die Signale in digitaler oder in analoger Form übermittelt werden. Eine solche softwaremäßige Hörgerätefunktion kann beispielsweise ohne weiteres bei Handys mit geliefertem Kopf- oder Ohrhörer oder MP3-Playern mit integriertem Mikrofon bereitgestellt werden. Da derartige Geräte heute regelmäßig Schnittstellen zum Computer aufweisen, kann die Nachrüstung in einfacher und kostengünstiger Form gegebenenfalls durch einen Download über das Internet erfolgen.

Ob das Multimediagerät nur softwaremäßig anzupassen ist oder auch hardwaremäßig, kommt auf die Geräteausstattung und Konfiguration an sowie möglicherweise auch auf den späteren Bedienkomfort. Das Multimediagerät ist in jedem Fall so auszustatten, dass die Hörgerätefunktion aktiviert und gegebenenfalls deaktiviert werden kann. In einfachster Form können diese Steuermittel durch einen gesonderten Einund Ausschalter gebildet sein, es können jedoch auch vorhandene Schalter softwaremäßig diesbezüglich umprogrammiert werden, derart, dass gesondert oder zusätzlich der Hörgerätebetrieb aktiviert bzw. deaktiviert werden kann, bei welchem ein vom Mikrofon im Empfangsteil aufgenommenes Signal verstärkt und an den Ohr- oder Kopfhörer des Wiedergabeteils weitergegeben wird.

Grundsätzlich ist es zweckmäßig, wenn das im Multimediagerät vorhandene Empfangsteil Verwendung findet. Für solche Geräte, die ein solches Empfangsteil nicht aufweisen oder die zusätzlich einen gesonderten Mikrofonanschluss aufweisen, kann es vorteilhaft sein, ein externes Mikrofon anzuschließen, da die Richtcharakteristik externer Mikrofone regelmäßig günstiger als der meist kostengünstig integrierten Mikrofone ist.

In Ausgestaltung ist vorgesehen, dass das Empfangsteil, das vorzugsweise ein starkes Richtmikrofon erhält, in ein an sich bekanntes Telekommunikations-, Audio- oder Videogerät integriert ist. Dies ermöglicht den Verzicht auf ein separates Hörgeräteempfangsteil. Herkömmliche Geräte können durch den Einbau eines starken Richtmikrofons und der zugehörigen elektrotechnischen Einrichtungen, wie insbesondere eines A/D-Wandlers, eines Signalprozessors, eines D/A-Wandlers und Mitbenutzung eines in dem jeweiligen Gerät ohnehin vorhandenen Verstärkers und Potentiometers preisgünstig zu einem Hörgerät erweitert werden. Gleichzeitig sind diese vom jeweiligen Benutzer völlig unauffällig zu benutzen. Anders als bei an sich bereits bekannten, separaten Empfangsteilen mit Richtmikrofonen, die deutlich sichtbar auf die jeweils sprechende Person ausgerichtet werden müssen, fällt im normalen, alltäglichen Umgang die Benutzung eines üblichen Mobilfunktelefons, eines MC- oder CD-Abspielgerätes (Walkman®) oder eines MP3-Players, eines Organizers oder dgl. als Hörgeräteempfangsteil (mit Verstärkungseinrichtung) überhaupt nicht auf. Die akustischen Signale in der Umgebung des Benutzers werden von dem Richtmikrofon in dem handelsüblichen Telekommunikations-, Audio- oder Videogerät aufgenommen, in digitale Signale umgewandelt, mit Hilfe des Signalprozessors verarbeitet, wobei beispielsweise Störgeräusche ausgeschaltet werden können, anschließend werden sie wieder in analoge Signale zurückverwandelt und verstärkt. Mit Hilfe des Potentiometers kann der Benutzer die Lautstärke wunschgemäß regulieren.

Das Empfangsteil kann wie die handelsüblichen Telekommunikations-, Audio- oder Videogeräte vom Benutzer am Körper getragen werden, und wird mit üblichen, wieder aufladbaren Batterien oder Akkumulatoren des an sich bekannten Gerätes versorgt. Die an das Wiedergabeteil drahtlos oder drahtgebunden weitergegebenen Signale können auch mit Musik-Signalen des jeweiligen Gerätes gemischt werden, beispielsweise kann weiterhin (mit geringerer Lautstärke) Musik über die Lautsprecher des Kopfhörers bzw. Head-Sets an den Hörgeschädigten weitergeleitet werden. Die Integrationsstelle des Empfangsteils kann je nach den Anforderungen des Benutzers am Signalprozessor oder hinter diesem liegen. Auch können die Hörsignale wahlweise vom Empfangsteil oder vom Audiogerät oder von beiden ausgewählt werden.

Die Erfindung ist nachstehend anhand der Zeichnung näher erläutert. Diese zeigen in
- Fig. 1: eine Prinzipskizze eines Empfangs- und eines Wiedergabeteils,
- Fig. 2: ein Schaltbild eines Empfangsteils.

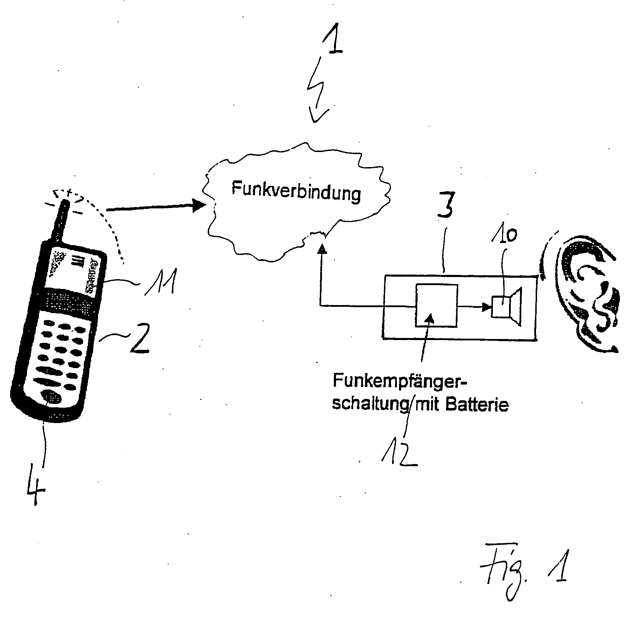

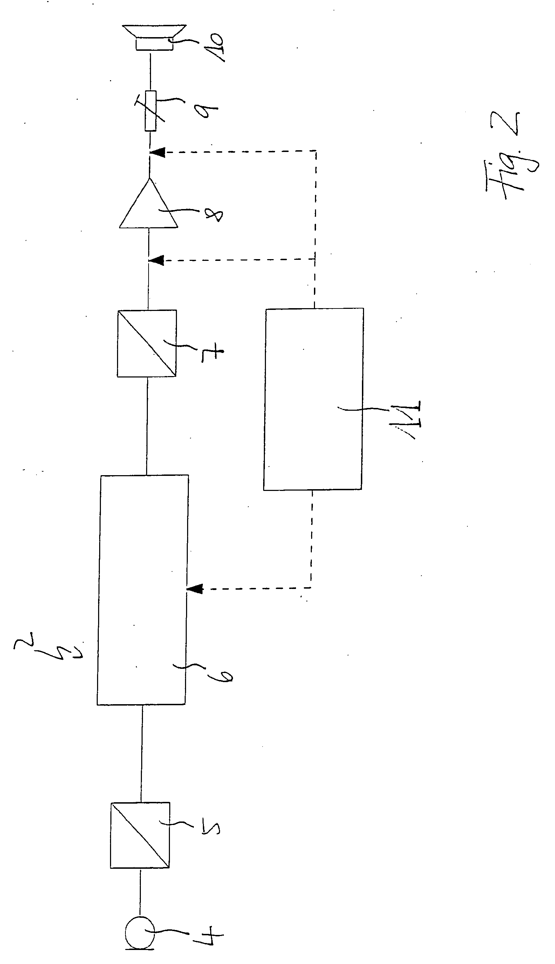

Ein allgemein mit 1 bezeichnetes Hörgerät besteht aus einem Empfangsteil 2 und einem Wiedergabeteil 3. Das Empfangsteil 2 kann dabei ein herkömmliches Mobilfunkgeräte (Handy), ein Sprechfunkgerät (Walkie-Talkie), ein Audio- oder Video-(spiel) Gerät oder dergleichen sein. Wesentlich ist nur, dass es ein leistungsstarkes (Richt-) Mikrofon 4 aufweist, mit dem die Stimme von Gesprächspartnern des Benutzers aufgenommen werden kann. Das herkömmliche Gerät weist, wie aus Fig. 2 im Einzelnen hervorgeht, eine spezielle Schaltung und elektronische Bauteile wie folgt auf: Neben dem Richtmikrofon 4 ist zunächst ein Analog/Digital-Wandler 5 und dahinter ein Signal-Prozessor 6 vorgesehen. Die akustischen Signale in der Umgebung des Benutzers werden von dem Richtmikrofon 4 aufgenommen, mit Hilfe des A/D-Wandlers 5 in digitale Signale umgewandelt, mit Hilfe des Signal-Prozessors 6 weiterverarbeitet, indem beispielsweise Störgeräusche ausgeschaltet werden, und anschließend mit einem Digital-/Analog-Wandler 7 in analoge Signale zurückverwandelt und abschließend mit einem Verstärker 8 verstärkt. Mit Hilfe eines Potentiometers 9 kann die Lautstärke des Lautsprechers 10, der, wie aus Fig. 1 hervorgeht, Bestandteil des Wiedergabeteils 3 (z. B. eines Head-Sets oder Kopfhörers) ist, reguliert werden. Das gesamte Empfangsteil 2 ist dabei in ein Audio- oder Video (spiel) Gerät oder Telekommunikationsgerät 11 integriert. Der Lautsprecher 10 kann, wie in Fig. 2 dargestellt, drahtgebunden, oder wie in Fig. 1 dargestellt, drahtlos mit dem Empfangsteil, insbesondere dem Potentiometers 9 verbunden sein. Im Fall einer drahtlosen Verbindung , insbesondere durch eine Funktechnik wie z. B., aber nicht ausschließlich DECT, Bluetooth oder dergleichen oder eine Infrarotverbindung, weist das Empfangsteil 3 noch eine Empfängerschaltung 12 bzw. einen Infrarotempfänger mit einer nicht näher dargestellten Stromversorgung, insbesondere eine Batterie auf.

Natürlich ist die Erfindung nicht auf die dargestellten Ausführungsbeispiele beschränkt. Weitere Ausgestaltungen sind möglich, ohne den Grundgedanken zu verlassen. Wesentlich ist nur, dass das Empfangsteil in ein herkömmliches tragbares elektronisches Gerät integriert ist. In Betracht kommt auch eine Zusammenfassung eines Empfangs- und Wiedergabeteils, wie dies etwa bei in Kopfhörern oder Head-Sets integrierten Receivern der Fall sein kann.

## Patentansprüche

1. Hörgerät mit einem Empfangsteil (2) und einem Wiedergabeteil (3), **dadurch gekennzeichnet, dass** der Empfangsteil (2) Teil eines Multimediagerätes (11) bildet und der Wiedergabeteil (3) einen Kopf- oder Ohrhörer (10) aufweist, der mit dem Multimediagerät (11) signalverbunden ist.

2. Hörgerät nach Anspruch 1, **dadurch gekennzeichnet, dass** das Multimediagerät Mittel zur Steuerung der Hörgerätefunktion aufweist.

3. Hörgerät nach einem der vorhergehenden Ansprüche, **dadurch gekennzeichnet, dass** der Kopfhörer oder Ohrhörer (10) Teil eines Headsets bilden.

4. Hörgerät nach einem der vorhergehenden Ansprüche, **dadurch gekennzeichnet, dass** der Kopfhörer oder Ohrhörer (10) drahtlos, vorzugsweise über Funk oder Infrarot mit dem Multimediagerät (11) signalverbunden ist.

5. Hörgerät nach einem der vorhergehenden Ansprüche, **dadurch gekennzeichnet, dass** der Empfangsteil (2) ein externes Mikrofon aufweist, das mit dem Multimediagerät (11) signalverbunden ist.

6. Hörgerät nach einem der vorhergehenden Ansprüche, **dadurch gekennzeichnet, dass** das Multimediagerät (11) ein Schnurlostelefon oder Handy (11) ist.

7. Hörgerät nach einem der vorhergehenden Ansprüche, **dadurch gekennzeichnet, dass** das Multimediagerät (11) ein Unterhaltungselektronikgerät, vorzugsweise ein mobiles Audiogerät wie Radio, CD-Spieler, Kassettenabspielgerät, MP3-Player ist.

8. Hörgerät nach einem der vorhergehenden Ansprüche, **dadurch gekennzeichnet, dass** das Multimediagerät (11) eine vorzugsweise mobile Spielekonsole ist.

9. Hörgerät nach einem der vorhergehenden Ansprüche, **dadurch gekennzeichnet, dass** das Multimediagerät (11) ein vorzugsweise mobiles Videogerät ist.
